Europäisches Patentamt

European Patent Office

Office européen des brevets

(19)

(11) Numéro de publication: **0 055 980**
**A2**

(12) **DEMANDE DE BREVET EUROPEEN**

(21) Numéro de dépôt: **81870051.0**

(22) Date de dépôt: **15.12.81**

(51) Int. Cl.³: **H 02 G 3/04**

(30) Priorité: **19.12.80 ES 255155 U**

(43) Date de publication de la demande:
**14.07.82 Bulletin 82/28**

(84) Etats contractants désignés:
**AT BE DE FR GB IT NL SE**

(71) Demandeur: **Quintana Quintana, Blas**
**Faycan no 6 Vecindario**
**Las Palmas de Gran Canaria(ES)**

(72) Inventeur: **Quintana Quintana, Blas**
**Faycan no 6 Vecindario**
**Las Palmas de Gran Canaria(ES)**

(74) Mandataire: **Pirson, Jean et al,**
**c/o Bureau Gevers, S.A. rue de Livourne, 7 bte 1**
**B-1050 Brussels(BE)**

(54) **Conduites pour câbles ou éléments similaires, comportant des moyens incorporés de guidage pour ceux-ci.**

(57) Conduites pour câbles ou éléments similaires, comportant des moyens incorporés pour canaliser ou guider ces câbles ou autres éléments, en particulier conduites tubulaires synthétiques de structure rigide, caractérisées en ce qu'au cours de leur fabrication, notamment par moulage, ou après cette opération, l'intérieur de ces conduites (1) est garni, longitudinalement et sur la totalité de leur longueur, d'un brin, d'un filin, d'un cordon, d'un fil, d'un fil métallique ou autre élément (4) de section très fine et très résistant à la traction, tout en étant très malléable pour accepter les variations de forme et d'enroulement des conduites.

*Fig.1*

EP 0 055 980 A2

Croydon Printing Company Ltd.

"Conduites pour câbles ou éléments similaires, comportant des moyens incorporés de guidage •pour ceux-ci".

La présente invention est relative à de nouvelles conduites pour canaliser ou guider des câbles, principalement des fils ou câbles électriques, conduites dans lesquelles sont prévus des moyens ou organes incorporés pour faciliter, lorsqu'une telle conduite a été installée, la canalisation ou le guidage des câbles susdits en supprimant les inconvénients graves qui, en pratique, se présentent lorsqu'on doit introduire, guider ou canaliser ces câbles ou fils électriques alors que le parcours des conduites subit des variations ou changements de direction, en étant sinueuses ou en présentant des modifications angulaires de parcours.

Les spécialistes qui s'occupent en particulier des installations électriques utilisent une technique que l'on peut mentionner en tant que technique antérieure. Ils utilisent ce que l'on appelle un ruban, qui est de différentes formes, en étant constitué par un fil métallique en spirale, une bande ou un autre élément similaire, que l'on introduit par une extrémité d'une installation déterminée et que l'on essaye de faire sortir par l'autre extrémité, ce qui suppose parfois des travaux pénibles, des inconvénients de toutes sortes, des pertes excessives de temps et , ce qui n'est pas rare, en devant recourir à des interruptions des conduites en différents points pour permettre d'y faire passer le ruban. C'est

lorsque la conduite ou canalisation n'est pas très large qu'en pratique une interruption en différents points est indispensable.

La présente invention consiste essentiellement en une conduite ou canalisation, de préférence tubulaire et de section flexible, dans laquelle, intérieurement, en direction longitudinale, est introduit ou enfilé un brin, un filin, un cordon, un fil, un fil électrique ou autre élément de section très fine mais très résistant à la traction, par exemple un fil métallique fin ou un fil en Nylon, un tel élément étant très malléable pour accepter les changements de direction, de sens ou de position, d'une conduite, ainsi que les particularités d'enroulement de celle-ci.

Une autre caractéristique de l'invention est que le brin, le filin, le cordon, le fil ou élément similaire permettra d'attacher, à l'une quelconque des extrémités d'une conduite ou canalisation, les câbles du réseau électrique, en tirant ensuite à l'autre extrémité, ce qui permet une installation en une seule opération simple de travail.

Une autre caractéristique de l'invention est que le brin, le filin, le cordon ou le fil incorporé est soudé très légèrement tout au long de la surface interne de la conduite ou canalisation pour garantir ainsi son immobilisation, tout en pouvant être libéré très facilement avec un effort minimum.

Un autre détail de l'invention est que le brin, le filin, le cordon ou le fil incorporé est soudé très légèrement, de manière espacée ou intermittente, suivant la longueur de la surface intérieure de la conduite ou canalisation, dans le même but final que celui mentionné dans le paragraphe précédent.

De préférence, si on utilise un fil ou cordon synthétique, par exemple un fil en Nylon, on peut l'incorporer après ou durant l'opération de moulage du tube, de sorte qu'il adhère ainsi par soudage thermoplastique, soit suivant toute sa longueur, soit de manière intermittente.

Dans l'un quelconque des autres cas, le brin, le filin, le cordon ou le fil non synthétique pourra être incorporé ou soudé au tube, suivant l'une ou l'autre des solutions précitées, soit par pression durant l'état chaud du tube après son moulage, soit par adhérence grâce à une application ou frottement de matière adhésive sur l'une des deux parties.

Parmi les avantages pratiques que l'on peut mettre en évidence pour cette invention, on peut signaler les suivants :

1° - la conduite électrique est garnie d'avance du fil ou autre élément enfilé, de sorte qu'il reste à attacher un câble à une extrémité et à tirer par l'autre;

2° - en pratique, les longueurs sont normalement d'environ 18 mètres au maximum, ces longueurs entraînant les inconvénients suivants :

(A) Dès qu'une longueur est supérieure à 8 mètres, la conduite offre une résistance au ruban et plus cette longueur de la conduite est grande, plus élevée est cette résistance;

(B) Comme mentionné dans le paragraphe (A), quand la longueur de la conduite est grande, la résistance est élevée; de même, lorsque le diamètre de la conduite est grand, la résistance est plus élevée;

3° - Lorsqu'un travail est arrêté, un grand avantage résulte du fait que la conduite contient un fil, car à la reprise du travail, l'installateur ne doit pas perdre de temps à vérifier le schéma de l'installation·

On pourra avoir une idée plus complète encore des caractéristiques de l'invention grâce à la description suivante donnée avec référence aux dessins annexés, qui illustrent de manière schématique et à titre d'exemples seulement, les détails préférés de réalisation.

La Figure 1 est une vue en coupe transversale et verticale d'une conduite suivant l'invention, cette vue étant prise suivant les lignes B-B de la figure 2.

La Figure 2 est une vue en élévation latérale d'un bout de conduite suivant l'invention, partiellement en coupe longitudinale suivant les lignes A-A de la figure 1.

La Figure 3 est une vue analogue à la première, prise en coupe suivant les lignes C-C de la figure 4.

La Figure 4 est une vue semblable à la figure 2, à plus grande échelle et plus courte, correspondant à la figure 3.

La Figure 5 est une vue semblable à la figure précédente, concernant une variante de l'invention.

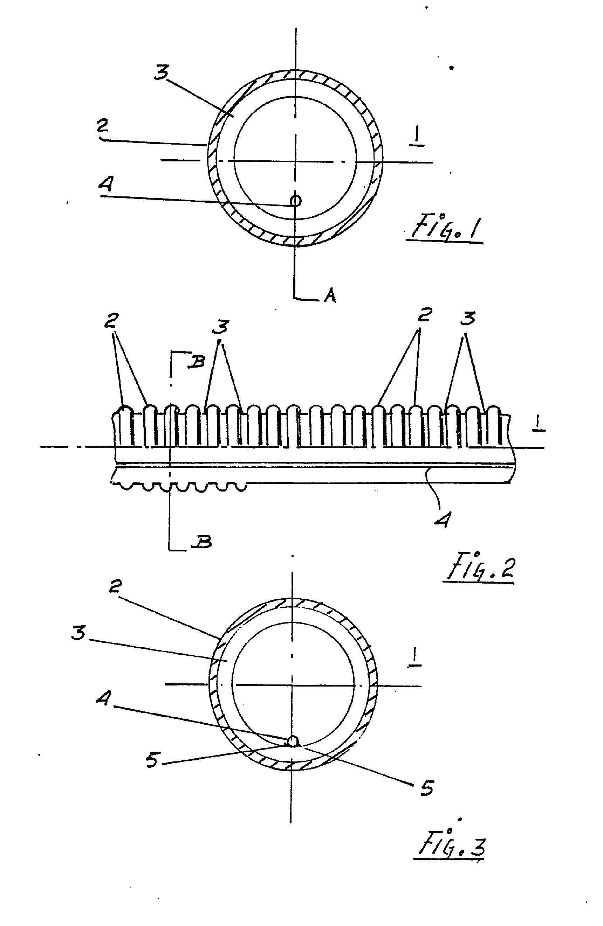

En considérant les dessins, on y a représenté un corps tubulaire de conduite ou canalisation flexible, tel qu'un tube rigide de matière plastique, présentant une section transversale comportant des reliefs intermédiaires courbes 2 et des bas-reliefs plans 3, dans lequel , longitudinalement et sur toute la longueur de ce tube, est incorporé, introduit ou enfilé un brin, un cordon, un filin, un fil ou élément similaire 4, qui est suffisamment résistant pour pouvoir attacher un ou des câbles du réseau électrique à l'une quelconque de ses extrémités, tout en pouvant être tiré à l'autre extrémité pour introduire ce ou ces câbles sur la totalité de la longueur de la canalisation.

De même, le brin, le cordon, le filin, le fil ou autre élément 4 est suffisamment malléable pour s'adapter à toutes les variations du tube, y compris lorsqu'on enroule celui-ci pour le bobiner.

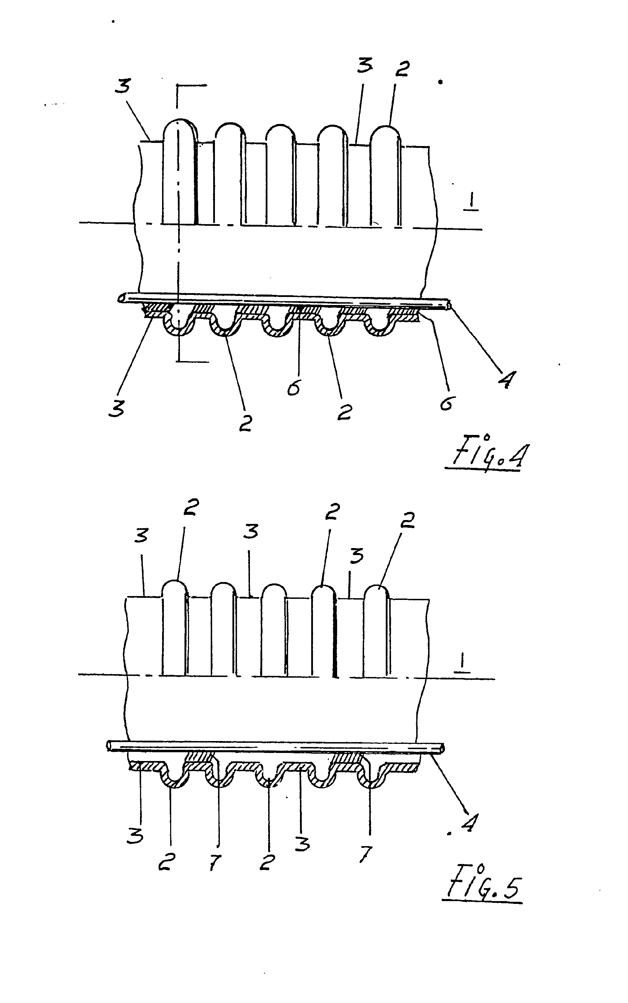

L'élément 4 susdit est de préférence soudé seulement très légèrement en 5 sur la totalité de l'étendue de la surface intérieure de la conduite 1, en étant par exemple (figure 4) soudé de manière thermoplastique ou amené à adhérer sur toute la longueur aux points 6 qui coïncident avec les reliefs internes de la conduite .

Les légers points de soudure ou d'adhérence peuvent être des points alternés et espacés 7 (figure 5) qui offrent une résistance minimale à une libération par une simple traction afin que l'opération d'introduction des câbles du réseau soit efficace, tout en garantissant en même temps que le fil ou autre élément ne forme. pas des boucles à l'intérieur de la conduite.

Il doit évidemment être entendu que l'invention n'est nullement limitée aux détails donnés car de nombreuses variantes peuvent être envisagées sans sortir pour autant du cadre du présent brevet.

REVENDICATIONS :

1. Conduites pour câbles ou éléments similaires, comportant des moyens incorporés pour canaliser ou guider ces câbles ou autres éléments, en particulier conduites tubulaires synthétiques de structure flexible, caractérisées en ce qu'au cours de leur fabrication, notamment par moulage, ou après cette opération, l'intérieur de ces conduites (1) est garni, longitudinalement et sur la totalité de leur longueur, d'un brin, d'un filin, d'un cordon, d'un fil, d'un fil métallique ou autre élément (4) de section très fine et très résistant à la traction, tout en étant très malléable pour accepter les variations de forme et d'enroulement des conduites.

2. Conduites pour câbles ou éléments similaires, comportant des moyens incorporés pour canaliser ou guider ceux-ci, suivant la revendication 1, caractérisées en ce que le brin, le filin, le cordon ou élément analogue (4) est soudé ou amené à adhérer légèrement tout au long de la surface intérieure des conduites (1).

3. Conduites pour câbles ou éléments similaires, comportant des moyens incorporés pour guider ou canaliser ceux-ci, suivant la revendication 1, caractérisées en ce que le brin, le filin, le cordon ou autre élément (4) est soudé ou amené à adhérer légèrement, de manière alternée ou intermittente (7), tout au long de la surface intérieure des conduites (1).

_Fig. 1_

_Fig. 2_

_Fig. 3_

FIG.4

FIG.5